# EUROPEAN PATENT APPLICATION

(11) **EP 2 267 091 A1**
(43) Date of publication of application: **29.12.2010**
(21) Application number: 09723921.4
(22) Date of filing: 23.03.2009
(51) Int. Cl.: C09J 7/02, C08L 23/00, C08L 25/00, C08L 33/00, C08L 67/00

(54) **ADHESIVE SHEET**

(30) Priority: 26.03.2008 JP 2008080538
(71) Applicant: Lintec Corporation, Itabashi-ku Tokyo 173-0001 (JP)
(72) Inventor: MORIOKA, Takashi, Tokyo 173-0001 (JP); TAYA, Naoki, Tokyo 173-0001 (JP)
(74) Representative: Perkins, Janet Frances
(86) International application number: PCT/JP2009/055682
(87) International publication number: WO 2009/119515

(57) **Abstract**

Provided is a pressure-sensitive adhesive sheet (1) comprising a base material (11) and a pressure-sensitive adhesive layer (12), and having formed therein a plurality of through-holes (2) passing through one face to the other face thereof. The base material (11) that is used comprises a resin composition containing 50 to 85 wt% of a polyolefin based resin (A) and 15 to 50 wt% of a resin (B) that exhibits a difference no greater than 60°C between a 5% weight reduction temperature in a thermogravimetric measurement at a temperature rise rate of 20°C/min using nitrogen as an inflowing gas, and a 5% weight reduction temperature in a thermogravimetric measurement at a temperature rise rate of 20°C/min using air as an inflowing gas. This allows obtaining an olefin pressure-sensitive adhesive sheet in which air entrapments and blisters can be prevented or eliminated, and in which through-holes can be formed by laser thermal processing.

## Description

### TECHNICAL FIELD

The present invention relates to a pressure-sensitive adhesive sheet that allows preventing or eliminating, for instance, air entrapments and blisters.

### BACKGROUND ART

When a pressure-sensitive adhesive sheet is stuck manually onto an adherend, air entrapments may occur between the adherend and the pressure-sensitive adhesive face, thereby detracting from the appearance of the pressure-sensitive adhesive sheet. Such air entrapments occur readily, in particular, when the surface area of the pressure-sensitive adhesive sheet is large.

Also, resin materials such as acrylic based resins, ABS resins, polystyrene resins, polycarbonate resins or the like may release gases when heated, or even without heating. When a pressure-sensitive adhesive sheet is stuck to an adherend comprising such resin materials, the gas released by the adherend may give rise to blisters in the pressure-sensitive adhesive sheet.

With a view to solving the above problems, Patent Document 1 proposes a pressure-sensitive adhesive sheet in which there are formed through-holes having a diameter of 0.1 to 300 µm and a hole density of 30 to 50,000 holes/100 cm². Such a pressure-sensitive adhesive sheet allows preventing air entrapments and blisters in the pressure-sensitive adhesive sheet by allowing air and/or gas on the pressure-sensitive adhesive-side face to escape towards the surface of the pressure-sensitive adhesive sheet, via the through-holes.
Patent Document 1: WO 2004/061031

The through-holes in the above pressure-sensitive adhesive sheet may be formed by laser processing. Laser processing methods include, for instance, laser ablation processing in which a target object is photolytically decomposed through irradiation of an UV laser such as an excimer laser or the like, and laser thermal processing in which an infrared laser beam, for instance from a carbon dioxide laser, is irradiated to thermally decompose a target object. Laser thermal processing using a carbon dioxide laser or the like is preferred in terms of cost. However, in case that the base material comprises an ordinary polyolefin material, it has been difficult to form through-holes by laser thermal processing because infrared laser beams from carbon dioxide lasers or the like are transmitted through the base material.

### DISCLOSURE OF THE INVENTION

In the light of the above, it is an object of the present invention to provide an olefin based pressure-sensitive adhesive sheet in which air entrapments and blisters can be prevented or eliminated, and in which through-holes can be formed by laser thermal processing.

In order to attain the above object, the present invention provides a pressure-sensitive adhesive sheet comprising a base material and a pressure-sensitive adhesive layer, and having formed therein a plurality of through-holes passing through one face to the other face thereof, wherein the base material comprises a resin composition containing 50 to 85 wt% of a polyolefin based resin (A) and 15 to 50 wt% of a resin (B) that exhibits a difference no greater than 60°C between a 5% weight reduction temperature in a thermogravimetric measurement at a temperature rise rate of 20°C/min using nitrogen as an inflowing gas, and a 5% weight reduction temperature in a thermogravimetric measurement at a temperature rise rate of 20°C/min using air as an inflowing gas (Invention 1).

Conceptually, the term "sheet" in the present description includes films, and the term "film" includes sheets.

In the above invention (Invention 1), the resin (B) undergoes thermal decomposition readily, and hence through-holes can be formed in the base material by laser thermal processing, such as carbon dioxide laser processing, by incorporating the resin (B) into the base material. The base material has excellent gasoline resistance thanks to the presence therein of the polyolefin based resin (A) in the above-described blending amounts. In the pressure-sensitive adhesive sheet according to the above invention (Invention 1), air entrapments and blisters can be eliminated by way of the through-holes.

In the above invention (Invention 1), preferably, the resin (B) has an absorption peak at the wavelength of a carbon dioxide laser (Invention 2).

In the above inventions (Inventions 1 and 2), preferably, the resin (B) is at least one selected from the group consisting of styrene based resins, polyester based resins and acrylic based resins (Invention 3).

In the above inventions (Inventions 1 to 3), preferably, the polyolefin based resin (A) is a copolymer comprising a polar monomer as a repeat unit (Invention 4).

In the above inventions (Inventions 1 to 4), preferably, the through-holes are formed by laser thermal processing (Invention 5).

In the above invention (Invention 5), preferably, a laser used in the laser thermal processing is a carbon dioxide laser (Invention 6).

In the above inventions (Inventions 1 to 6), preferably, the diameter of the through-holes at the surface of the base material is smaller than the diameter of the through-holes at a pressure-sensitive adhesive face of the pressure-sensitive adhesive layer (Invention 7).

The present invention allows obtaining an olefin based pressure-sensitive adhesive sheet in which air entrapments and blisters can be prevented or eliminated, and in which through-holes can be formed by laser thermal processing.

### BRIEF DESCRIPTION OF THE DRAWINGS

Fig. 1 is a cross-sectional diagram of a pressure-sensitive adhesive sheet according to an embodiment of the present invention; and
Fig. 2 is a cross-sectional diagram illustrating an example of a method for manufacturing a pressure-sensitive adhesive sheet according to an embodiment of the present invention.

### EXPLANATION OF REFERENCE NUMERALS

- 1: pressure-sensitive adhesive sheet
- 11: base material
- 12: pressure-sensitive adhesive layer
- 13: release material
- 1A: base material surface
- 1B: pressure-sensitive adhesive face
- 2: through-holes

### BEST MODE FOR CARRYING OUT THE INVENTION

An embodiment of the present invention will be explained as follows.

### [Pressure-sensitive adhesive sheet]

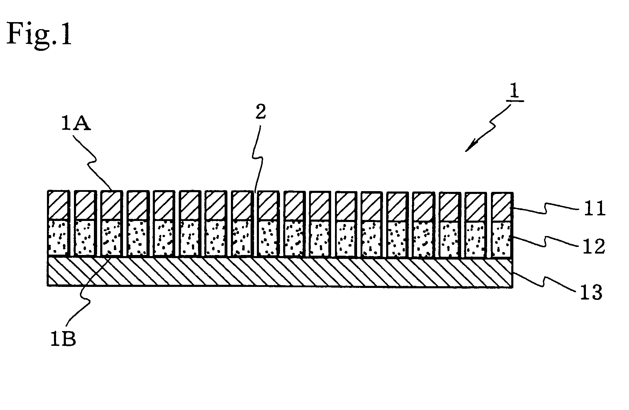

Fig. 1 is a cross-sectional diagram of a pressure-sensitive adhesive sheet according to an embodiment of the present invention.

As illustrated in Fig. 1 a pressure-sensitive adhesive sheet 1 according to the present embodiment is obtained by laminating a base material 11, a pressure-sensitive adhesive layer 12 and a release material 13. The release material 13 is peeled off when the pressure-sensitive adhesive sheet 1 is used.

In the pressure-sensitive adhesive sheet 1 there is formed a plurality of through-holes 2 passing through the base material 11 and the pressure-sensitive adhesive layer 12, from a base material surface 1A to a pressure-sensitive adhesive face 1B. During use of the pressure-sensitive adhesive sheet 1, air trapped between the pressure-sensitive adhesive face 1B of the pressure-sensitive adhesive layer 12 and the adherend, and/or gas released by the adherend, are evacuated via the through-holes 2 out of the base material surface 1A. Thereby, air entrapments and blisters can be prevented or air entrapments can be eliminated easily, as described below.

The base material 11 is a resin film, in the form, for instance, of a film, a foamed film or a laminate film of the foregoing, that comprises a resin composition containing the polyolefin based resin (A) and the below-described resin (B).

As the polyolefin based resin (A) there can be used a homopolymer or copolymer of an olefin such as ethylene or propylene, or a copolymer of an olefin and another monomer. The foregoing can be used singly or in blends of two or more.

The other monomer in the copolymer is preferably a polar monomer. A copolymer that comprises polar monomers as repeat units has good dispersibility with the resin (B). Examples of polar monomers include, for instance, (meth)acrylic acid, (meth)acrylic acid esters, vinyl acetate, vinyl alcohol, maleic anhydride or the like.

Preferred instances of the polyolefin based resin (A) include, for instance, ethylene-(meth)acrylic acid copolymers, ethylene-alkyl (meth)acrylate copolymers, ethylene-vinyl acetate copolymers, ethylene-vinyl alcohol copolymers, ethylene-maleic anhydride copolymers and the like.

The weight average molecular weight of the polyolefin based resin (A) ranges preferably from 10,000 to 3,000,000, in particular from 50,000 to 500,000.

The resin (B) exhibits a difference (hereafter "5% weight reduction temperature difference") no greater than 60°C, preferably no greater than 30°C, between a 5% weight reduction temperature in a thermogravimetric measurement at a temperature rise rate of 20°C/min using nitrogen as an inflowing gas, and the 5% weight reduction temperature in a thermogravimetric measurement at a temperature rise rate of 20°C/min using air as an inflowing gas. The thermogravimetric measurement is performed in accordance with JIS K7120 "Testing methods of plastics by thermogravimetry", with a gas inflow rate of 100 ml/min and the weight at 100°C being the reference weight for the 5% weight reduction.

The above resin (B) undergoes thermal decomposition readily, and hence by incorporating the resin (B) into the base material 11, the through-holes 2 can be formed by laser thermal processing, for instance by carbon dioxide laser processing.

The resin (B) has preferably an absorption peak at the wavelength of the carbon dioxide laser, namely at 9.2 to 10.6 µm. The through-holes 2 can be formed thereby utilizing a small output.

As the resin (B) there can be selected a material having thermal decomposition characteristics such as the above, from among known materials. Preferably there is selected at least one resin selected from the group consisting of styrene based resins, polyester based resins and acrylic based resins.

Each of resins selected above may be homopolymers or copolymers. Specific examples of the resin (B) include, for instance, polystyrene resins, styrene-acrylic acid copolymers, styrene-acrylic acid ester copolymers, styrene-butadiene-styrene block copolymers, polyethylene terephthalate, polyethylene naphthalate, polybutylene terephthalate, polybutylene succinate adipate, (meth)acrylic resins, alkyl (meth)acrylate resins, polycarbonate, polylactic acid or the like. The foregoing can be used singly or in blends of two or more.

The copolymer is preferably a copolymer comprising a polar monomer as a repeat unit. Such a copolymer has good dispersibility with the olefin based resin (A), and has excellent workability in laser thermal processing, so that the through-holes 2 can be formed even when using small irradiation energy.

The weight average molecular weight of the resin (B) ranges preferably from 10,000 to 1,000,000, in particular from 50,000 to 500,000.

The content of resin (B) in the resin composition ranges from 15 to 50 wt%, preferably from 30 to 40 wt%. The through-holes 2 cannot be formed when the content of the resin (B) is lower than 15 wt%, while the gasoline resistance of the base material 11 is insufficient when the content of resin (B) exceeds 50 wt%.

The resin composition may comprise various additives such as organic fillers, inorganic fillers, UV absorbents and the like. The resin film may be formed by casting or the like using a carrier sheet. So long as the shape of the through-holes 2 is not impaired thereby, the surface of the resin film may have a decorative layer formed thereon by a method such as printing, typing, painting, transfer from a transfer sheet, vapor deposition or sputtering, or may have formed thereon an adhesion facilitating coat, for forming such a decorative layer, or various functional layers such as a gloss adjusting coat, a hard coat, an antifouling coat, a UV-absorbing coat or the like. The decorative layer or the functional layer may be formed over the entire surface of the material, or may be formed on only part of the surface of the material.

The thickness of the base material 11 ranges ordinarily from 1 to 500 µm, preferably from about 3 to 300 µm, but may vary appropriately in accordance with the use of the pressure-sensitive adhesive sheet 1.

The type of the pressure-sensitive adhesive that makes up the pressure-sensitive adhesive layer 12 is not particularly limited, so long as the through-holes 2 can be formed, and may be, for instance, of acrylic, polyester based, polyurethane based, rubber based or silicone based resin. The pressure-sensitive adhesive may be of emulsion type, solvent type, solvent-less type, and may be of crosslinked type or non-crosslinked type.

The thickness of the pressure-sensitive adhesive layer 12 ranges ordinarily from 1 to 300 µm, preferably from about 5 to 100 µm, but may vary appropriately in accordance with the use of the pressure-sensitive adhesive sheet 1.

The material of the release material 13 is not particularly limited. As such a material there may be used a film comprising a resin such as polyethylene terephthalate, polypropylene, polyethylene or the like, a foamed film thereof, or paper such as glassine paper, coated paper, laminated paper or the like which has been subjected to a release treatment using a release agent such as a silicone-based release agent, a fluorine-based release agent, or a carbamate containing a long-chain alkyl group.

The thickness of the release material 13 ranges ordinarily from about 10 to 250 µm, preferably from about 20 to 200 µm. The thickness of the release agent in the release material 13 ranges ordinarily from 0.05 to 5 µm, preferably from 0.1 to 3 µm.

The diameter of the through-holes 2 in the base material 11 and the pressure-sensitive adhesive layer 12 ranges preferably from 0.1 to 300 µm, particularly from 0.5 to 150 µm. Air and gas do not escape readily when the diameter of the through-holes 2 is smaller than 0.1 µm, while a diameter beyond 300 µm renders the through-holes 2 prominent, which mars the appearance of the pressure-sensitive adhesive sheet. In particular, the diameter at the surface 1A of the base material 11 is preferably no greater than 40 µm in case that the through-holes 2 must not be visible when viewed at close range.

The hole density of the through-holes 2 is preferably 30 to 50,000 holes/100 cm², in particular of 100 to 10,000 holes/100 cm². When the hole density of the through-holes 2 is less than 30 holes/100 cm², it may be harder for air or gas to escape, while when the hole density of the through-holes 2 exceeds 50,000 holes/100 cm², the tensile strength and/or tear strength of the pressure-sensitive adhesive sheet 1 may be impaired.

The through-holes 2 in the pressure-sensitive adhesive sheet 1 according to the present embodiment pass only through the base material 11 and the pressure-sensitive adhesive layer 12, but may also pass through the release material 13 as well.

The pressure-sensitive adhesive sheet 1 according to the present embodiment comprises the release material 13, but the present invention is not limited thereto, and the release material 13 may be omitted. Also, the size, shape and so forth of the pressure-sensitive adhesive sheet 1 according to the present embodiment are not particularly limited in any way. For instance, the pressure-sensitive adhesive sheet 1 may be a tape-like sheet (pressure-sensitive adhesive tape), comprising only the base material 11 and the pressure-sensitive adhesive layer 12, wound up in the form of a roll.

### [Manufacture of the pressure-sensitive adhesive sheet]

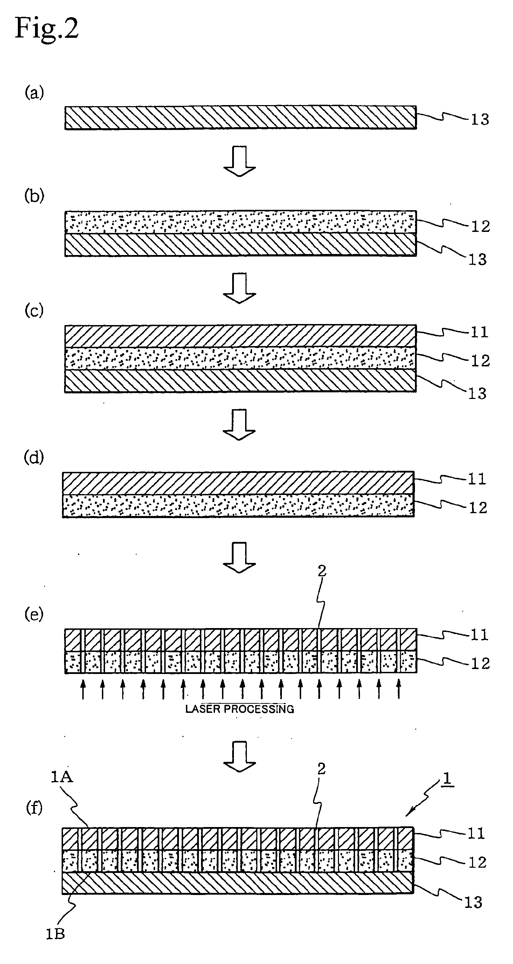

An example of the manufacturing method of the pressure-sensitive adhesive sheet 1 according to the present embodiment is explained next with reference to Figs. 2(a) to (f).

In the present manufacturing method, firstly the pressure-sensitive adhesive layer 12 is formed on the release-treated surface of the release material 13, as illustrated in Figs. 2(a) to (b). To form the pressure-sensitive adhesive layer 12 there is prepared a coating agent containing the pressure-sensitive adhesive comprised in the pressure-sensitive adhesive layer 12, and also a solvent, as desired; then the coating agent may be applied to the release-treated surface of the release material 13 using coating equipment such as a roller coater, a knife coater, a roll-knife coater, an air-knife coater, a die coater, a bar coater, a gravure coater, a curtain coater or the like, followed by drying.

Next, as illustrated in Fig. 2(c), the base material 11 is press-bonded to the surface of the pressure-sensitive adhesive layer 12, to yield a laminate comprising the base material 11, the pressure-sensitive adhesive layer 12 and the release material 13. The release material 13 is peeled off from the pressure-sensitive adhesive layer 12, as illustrated in Fig. 2(d), after which through-holes 2 are formed in the laminate that comprises the base material 11 and the pressure-sensitive adhesive layer 12, as illustrated in Fig. 2(e). The release material 13 is then re-pressed onto the pressure-sensitive adhesive layer 12, as illustrated in Fig. 2(f).

The through-holes 2 are preferably formed by laser thermal processing, since doing so allows forming minute through-holes, having good air-escaping ability, to a desired hole density. The laser used for laser thermal processing may be a carbon dioxide (CO₂ laser, a TEA-CO₂ laser, a YAG laser, a UV-YAG laser, an YVO₄ laser, an YLF laser or the like, preferably a carbon dioxide laser in terms of weight productivity and cost.

Formation of the through-holes 2 by laser thermal processing may involve a burst process (burst mode) in which laser light is continuously irradiated onto one site until formation of one through-hole 2, or a cycle process (cycle mode) in which a plurality of through-holes 2 are uniformly formed through successive irradiation of laser light onto a plurality of sites. The former process is superior as regards thermal efficiency, while the latter is better at reducing thermal impact on the object to be processed. Either process may be used in the above laser thermal processing.

When carrying out laser thermal processing, the laser beam is preferably irradiated towards the base material 11 side from the pressure-sensitive adhesive layer 12 side. Performing laser thermal processing thus from the pressure-sensitive adhesive layer 12 side allows achieving through-holes 2 having a smaller diameter at the base material surface 1A than at the pressure-sensitive adhesive face 1B of the pressure-sensitive adhesive layer 12. Also, the laser output energy can be reduced by irradiating the laser beam directly onto the pressure-sensitive adhesive layer 12 after temporary peeling of the release material 13. Reducing the output energy of the laser allows forming neatly shaped through-holes 2 with little fusion material and few thermally deformed sites caused by heat.

Laser thermal processing may give rise to fusion material that adheres to the peripheral edge of openings of the through-holes 2. However, adhesion of fusion material can be prevented by sticking a protective film onto the surface of the base material 11. The protective film used may be a known protective film employed in construction materials or metal plates. Laser thermal processing may be carried out in a state where a carrier sheet for casting is laminated on the surface of the base material 11, in case that a base material manufactured by casting is used as the base material 11.

In the above manufacturing method, the pressure-sensitive adhesive layer 12 is formed on the release material 13, and then the formed pressure-sensitive adhesive layer 12 and the base material 11 are press-bonded together. However, the present invention is not limited thereto, and the pressure-sensitive adhesive layer 12 may be formed directly on the base material 11.

### [Use of the pressure-sensitive adhesive sheet]

To stick the pressure-sensitive adhesive sheet 1 onto the adherend, firstly the release material 13 is peeled off from the pressure-sensitive adhesive layer 12.

Next, the exposed pressure-sensitive adhesive face 1B of the pressure-sensitive adhesive layer 12 is brought into close contact with the adherend, and the pressure-sensitive adhesive sheet 1 is pressed against the adherend. Thereupon, the air between the pressure-sensitive adhesive face 1B of the pressure-sensitive adhesive layer 12 and the adherend is evacuated out of the base material surface 1A via the through-holes 2 formed in the pressure-sensitive adhesive sheet 1, thereby making entrapment of air between the pressure-sensitive adhesive face 1B and the adherend less likely, and preventing hence the formation of air entrapments. Even if air entrapments form as a result of air becoming caught, such air entrapments are eliminated by re-pressing the air entrapment portions or air-entrapment peripheral portions that encompass the air entrapment portions, thereby causing the air to escape out through the base material surface 1A, via the through-holes 2. Such removal of air entrapments is also possible long after the pressure-sensitive adhesive sheet 1 has been stuck.

Even if the adherend releases a gas once the pressure-sensitive adhesive sheet 1 has been stuck onto the adherend, such a gas can escape out of the base material surface 1A via the through-holes 2 formed in the pressure-sensitive adhesive sheet 1, thus averting the formation of blisters in the pressure-sensitive adhesive sheet 1.

### Examples

The present invention is explained in detail below based on examples. However, the invention is in no way meant to be limited to or by the examples.

### [Example 1]

Kneaded pellets were prepared by adding 50 wt% of a styrene-alkyl acrylate copolymer (SC004, manufactured by PS JAPAN Corp.) to 50 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A film 100 µm thick was then prepared from the kneaded pellets, using an extrusion tester (LABOPLAST MILL 30C150, manufactured by TOYO SEIKI SEISAKU-SHO, Ltd). The obtained film was used as a base material of pressure-sensitive adhesive sheets.

A release liner (FPM-11, thickness: 175 µm, manufactured by LINTEC CORPORATION) was obtained by laminating a polyethylene resin onto both faces of woodfree paper followed by a release treatment of one face using a silicone based release agent. A coating agent of an acrylic based solvent-type pressure-sensitive adhesive (PK, manufactured by LINTEC CORPORATION) was applied with a knife coater, to a thickness after drying of 30 µm, onto the release-treated surface of the release liner. The whole was then dried at 90°C over 1 minute. The above film, as the base material, was press-bonded to the pressure-sensitive adhesive layer formed as described above. Onto the surface of the base material there was superposed also a protective sheet (E-2035, thickness: 60 µm, manufactured by SUMIRON Co.) having a removable pressure-sensitive adhesive layer, to yield a laminate having a 4-layer structure.

The release liner was peeled off from the laminate, and the latter was irradiated with a carbon dioxide laser (using a YB-HCS03, manufactured by PANASONIC Corp., two-shot burst process, frequency: 10,000 Hz, pulse width: 25 µsec (first shot)/12 µsec (second shot)), from the pressure-sensitive adhesive layer-side, to form through-holes at a hole density of 2500 holes/ 100 cm². Next, the above release material was press-bonded again onto the pressure-sensitive adhesive layer and the protective sheet was stripped off the base material surface, to yield a pressure-sensitive adhesive sheet.

### [Example 2]

Kneaded pellets were prepared by adding 30 wt% of a styrene-alkyl acrylate copolymer (SC004, manufactured by PS JAPAN Corp.) to 70 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Example 3]

Kneaded pellets were prepared by adding 15 wt% of a styrene-alkyl acrylate copolymer (SC004, manufactured by PS JAPAN Corp.) to 85 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Example 4]

Kneaded pellets were prepared by adding 30 wt% of a styrene-butadiene-styrene block copolymer (MD6459, manufactured by KRATON POLYMERS JAPAN), to 70 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Example 5]

Kneaded pellets were prepared by adding 50 wt% of poly(butylene succinate adipate) (BIONOLLE 3010, manufactured by SHOWA HIGHPOLYMER, Co., Ltd.) to 50 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Example 6]

Kneaded pellets were prepared by adding 30 wt% of a styrene-alkyl acrylate copolymer (SC004, manufactured by PS JAPAN Corp.) to 70 wt% of an ethylene-methyl methacrylate copolymer (ACRYFT WD301, manufactured by SUMITOMO CHEMICAL Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Example 7]

Kneaded pellets were prepared by adding 50 wt% of poly(methyl methacrylate) (manufactured by ALDRICH) to 50 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Comparative example 1]

Kneaded pellets were prepared by adding 30 wt% of polycaprolactone (PLACCEL H7, manufactured by DIACEL CHEMICAL INDUSTRIES Ltd.) to 70 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Comparative example 2]

Kneaded pellets were prepared by adding 30 wt% of a mixture (SS700, manufactured by PS JAPAN Corp.) of a styrene-alkyl methacrylate-alkyl acrylate copolymer, a styrene-butadiene copolymer and a petroleum resin to 70 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Comparative example 3]

Kneaded pellets were prepared by adding 60 wt% of a styrene-alkyl acrylate copolymer (SC004, manufactured by PS JAPAN Corp.) to 40 wt% of an ethylene-methacrylic acid copolymer (NUCREL N0903HC, manufactured by DU PONT-MITSUI POLYCHEMICALS Co., Ltd.), in a twin-screw extrusion kneader (KZW25TWIN-30MG-STM, manufactured by TECHNOVEL Corp.). A pressure-sensitive adhesive sheet was prepared in the same way as in Example 1, except that these kneaded pellets were used herein.

### [Comparative example 4]

A pressure-sensitive adhesive sheet was prepared in the same way as in Example 1, but without adding any additive resin to the ethylene-methacrylic acid copolymer (NUCREL N0903HC, manufactured by DU PONT-MITSUI POLYCHEMICALS Co., Ltd.).

### [Experimental example]

### (1) Measurement of 5% weight reduction temperature difference

The additive resins of the base materials used in the examples and comparative examples were subjected to a thermogravimetric measurement (according to JIS K7120 "Testing methods of plastics by thermogravimetry") employing a simultaneous thermogravimetry/differential thermal analysis instrument (DTG-60, manufactured by SHIMADZU Corp.), using nitrogen as an inflowing gas, at a gas inflow rate of 100 ml/min, and raising the temperature from 40°C to 550°C at a temperature rise rate of 20°C/min. A thermogravimetric measurement was carried out similarly, except using air as an inflowing gas. The temperature at which the weight is reduced by 5% compared to the weight at a temperature of 100°C (5% weight reduction temperature) was determined on the basis of the obtained thermogravimetric curve. There was calculated the difference between the 5% weight reduction temperature using nitrogen as the inflowing gas and the 5% weight reduction temperature using air as the inflowing gas. The results are given in Table 1.

### (2) Absorption peak measurement

The absorption spectra of the additive resins of the base materials used in the examples and comparative examples were measured by ATR, using a Fourier transform infrared spectrometer (SPECTRUM ONE, manufactured by PERKIN ELMER Inc.), to check the presence of absorption peaks at the wavelength (10.6 µm) of the carbon dioxide laser. The results are given in Table 1.

**Table 1**

| | 5% weight reduction temperature (°C) | | | Absorption peak (10.6 µm) |
|---|---|---|---|---|
| | Nitrogen | Air | Difference | |
| Example 1 | 327.5 | 313.0 | 14.5 | Yes |
| Example 2 | 327.5 | 313.0 | 14.5 | Yes |
| Example 3 | 327.5 | 313.0 | 14.5 | Yes |
| Example 4 | 391.1 | 365.9 | 25.2 | Yes |
| Example 5 | 368.4 | 312.9 | 55.5 | Yes |
| Example 6 | 327.5 | 313.0 | 14.5 | Yes |
| Example 7 | 271.9 | 269.1 | 2.8 | Yes |
| Comp. example 1 | 393.8 | 276.7 | 117.1 | Yes |
| Comp. example 2 | 385.9 | 324.7 | 61.2 | Yes |
| Comp. example 3 | 327.5 | 313.0 | 14.5 | Yes |
| Comp. example 4 | - | - | - | - |

### (3) Measurement of through-hole diameter

The pressure-sensitive adhesive sheets obtained in the examples and comparative examples were cut at portions of the through-holes. The diameter of the through-holes at the base material surface, at the interface between the base material and the pressure-sensitive adhesive layer, and at the pressure-sensitive adhesive face, was measured using a digital microscope (VHX-200, manufactured by KEYENCE Corp.). The number of through-holes per 100 cm² was counted. The results are given in Table 2.

**Table 2**

| | Through-hole diameter (µm) | | | Number of through-holes (holes/100 cm²) |
|---|---|---|---|---|
| | Base material surface | Interface | Pressure-sensitive adhesive face | |
| Example 1 | 25-30 | 65-75 | 75 | 2465 |
| Example 2 | 25-30 | 65-70 | 75 | 2443 |
| Example 3 | 25-30 | 60-65 | 70 | 2412 |
| Example 4 | 25-30 | 65-70 | 70 | 2457 |
| Example 5 | 20-30 | 65-70 | 75 | 2267 |
| Example 6 | 20-30 | 55-60 | 70 | 2356 |
| Example 7 | 20-30 | 55-60 | 65 | 2240 |
| Comp. example 1 | 20-30 | 55-60 | 70 | 11 |
| Comp. example 2 | 20-30 | 55-60 | 70 | 25 |
| Comp. example 3 | 25-30 | 65-75 | 75 | 2486 |
| Comp. example 4 | - | - | - | 0 |

### (4) Appearance inspection

The appearance of the pressure-sensitive adhesive sheets obtained in the examples and comparative examples was tested as described below. The results are given in Table 3.

Each pressure-sensitive adhesive sheet (size: 30 mmx30 mm), from which the release liner had been peeled off, was stuck to a melamine-coated steel plate, and the appearance of the surface of the pressure-sensitive adhesive sheet was inspected with the naked eye under indoor fluorescent lighting. The distance from the eyes to the pressure-sensitive adhesive sheet was set at approximately 30 cm, and the angle from which the pressure-sensitive adhesive sheet was viewed was changed in various ways. The absence of through-holes visible to the naked eye was rated as ○ (good) and the presence of visible through-holes as × (poor).

### (5) Gasoline resistance test

The gasoline resistance of the pressure-sensitive adhesive sheets obtained in the examples and comparative examples was tested as described below. The results are given in Table 3.

Each pressure-sensitive adhesive sheet that had been stuck to a melamine coated plate, as in (4) above, and left to stand for 24 hours, was immersed for 0.5 hours in gasoline at normal temperature, then picked out of the gasoline and dried. The appearance of the sheet was observed in the same way as in (4) above. The absence of through-holes visible to the naked eye was rated as ○ and the presence of through-holes as ×.

### (6) Air-entrapment removability test 1

The air-entrapment removability of the pressure-sensitive adhesive sheets obtained in the examples and comparative examples was tested as described below. The results are given in Table 3.

Each pressure-sensitive adhesive sheet (size: 50 mmx50 mm), having the release liner peeled therefrom, was stuck to a flat melamine-coated plate in such a way so as to form an air entrapment having a diameter of about 15 mm. The pressure-sensitive adhesive sheet was press-bonded using a squeegee, and then it was checked whether the air entrapment could be removed or not. In the results, ○ denotes cases where air entrapments were removed, and × denotes cases where air entrapments were not removed (sheets with residual air entrapments, however small).

### (7) Air-entrapment removability test 2

The air-entrapment removability of the pressure-sensitive adhesive sheets obtained in the examples and comparative examples was tested as described below. The results are given in Table 3.

Each pressure-sensitive adhesive sheet (size: 50 mm×50 mm), having the release liner peeled therefrom, was stuck to a 70 mm×70 mm melamine-coated plate having partially spherical depressions having a diameter of 15 mm and a maximum depth of 1 mm (so as to give rise to air entrapments between the depressions and the pressure-sensitive adhesive sheet). The pressure-sensitive adhesive sheet was pressure-bonded using a squeegee, and then it was checked whether the air entrapments could be removed or not. In the results, ○ denotes cases in which air entrapments were eliminated as the pressure-sensitive adhesive sheet hugged the depressions of the melamine-coated plate, while × denotes cases in which air entrapments failed to be eliminated as the pressure-sensitive adhesive sheet failed to hug the depressions of the melamine-coated plate (sheets with residual air entrapments, however small).

**Table 3**

| | Appearance inspection | Gasoline resistance | Air-entrapment removability 1 | Air-entrapment removability 2 |
|---|---|---|---|---|
| Example 1 | ○ | O | O | O |
| Example 2 | ○ | O | O | O |
| Example 3 | ○ | O | O | O |
| Example 4 | ○ | O | O | O |
| Example 5 | ○ | O | O | O |
| Example 6 | ○ | O | O | O |
| Example 7 | ○ | O | O | O |
| Comp. example 1 | O | O | × | × |
| Comp. example 2 | O | × | ○ | × |
| Comp. example 3 | O | × | O | O |
| Comp. example 4 | - | - | × | × |

As Tables 1 to 3 show, the pressure-sensitive adhesive sheets (Examples 1 to 7) using a base material that meets the conditions of the present invention exhibited excellent air-escaping ability, and the diameter of the through-holes at the base material surface was small. As a result, the sheets exhibited a good appearance, with no through-holes visible to the naked eye. The sheets had likewise good gasoline resistance, in that no through-holes were visible to the naked eyed after immersion in gasoline. INDUSTRIAL APPLICABILITY

The pressure-sensitive adhesive sheet of the present invention can be preferably used in cases where air entrapments and/or blisters are ordinarily likely to occur in pressure-sensitive adhesive sheets, for instance when the pressure-sensitive adhesive sheet has a large surface area or when gas is released by the adherend, and also in cases where good appearance is required not only under ordinary environments but also under environments where a liquid such as gasoline adheres to the pressure-sensitive adhesive sheet.

## Claims

1. A pressure-sensitive adhesive sheet comprising a base material and a pressure-sensitive adhesive layer, and having formed therein a plurality of through-holes passing through one face to the other face thereof,
wherein said base material comprises a resin composition that contains:
50 to 85 wt% of a polyolefin based resin (A); and
15 to 50 wt% of a resin (B) that exhibits a difference no greater than 60°C between a 5% weight reduction temperature in a thermogravimetric measurement at a temperature rise rate of 20°C/min using nitrogen as an inflowing gas, and a 5% weight reduction temperature in a thermogravimetric measurement at a temperature rise rate of 20°C/min using air as an inflowing gas.

2. The pressure-sensitive adhesive sheet according to claim 1, wherein said resin (B) has an absorption peak at the wavelength of a carbon dioxide laser.

3. The pressure-sensitive adhesive sheet according to claim 1 or 2, wherein said resin (B) is at least one selected from the group consisting of styrene based resins, polyester based resins and acrylic based resins.

4. The pressure-sensitive adhesive sheet according to any one of claims 1 to 3, wherein said polyolefin based resin (A) is a copolymer comprising a polar monomer as a repeat unit.

5. The pressure-sensitive adhesive sheet according to any one of claims 1 to 4, wherein said through-holes are formed by laser thermal processing.

6. The pressure-sensitive adhesive sheet according to claim 5, wherein a laser used in said laser thermal processing is a carbon dioxide laser.

7. The pressure-sensitive adhesive sheet according to any one of claims 1 to 6, wherein the diameter of said through-holes at the surface of said base material is smaller than the diameter of said through-holes at a pressure-sensitive adhesive face of said pressure-sensitive adhesive layer.
